# EUROPEAN PATENT SPECIFICATION

(11) **EP 0 821 882 B1**
(45) Date of publication and mention of the grant of the patent: **26.01.2000**
(21) Application number: 97105024.0
(22) Date of filing: 26.03.1997
(51) Int. Cl.: A23J 3/18

(54) **Vegetable meat**
Pflanzliches Fleisch
Viande végétale

(30) Priority: 30.07.1996 IT RM960549
(43) Date of publication of application: 04.02.1998
(73) Proprietor: Green Live Vegetable Meat S.r.l., 00141 Rome (IT)
(72) Inventor: Anzalone, Beniamino, 00141 Rome (IT)
(74) Representative: Ferreccio, Rinaldo

(56) References cited:
- EP-A- 0 262 276
- WO-A-94/28738
- DE-A- 2 349 566
- DATABASE WPI Section Ch, Week 9006 Derwent Publications Ltd., London, GB; Class D13, AN 90-039333 XP002034831 & HU 50 012 A (NATURA GT) , 28 December 1989
- RESEARCH DISCLOSURE, no. 207, 1981, page 260-261 XP002034830 "Synthetic meat granules"

## Description

The invention concerns a high nutritional value food in alternative to animal meat.

Vegetable meat is composed of natural products based on gluten, cereal flour and legume flour.
European patent application No. 0 262 276 discloses a process for preparing a meat analogue which involves mixing gluten, wheat flour and further optional components with water so as to obtain a dough. The dough is then heated and allowed to expand in three dimensions until its volume is increased by at least 35%; afterwards, the dough is oriented by forcing it inwardly in two dimensions while allowing free movement in the third direction to effect a reduction in cross-sectional area by at least 25% of the original cross sectional area.
Patent application DE-A-2 349 566 discloses a process for preparing a meat-like product, comprising blending wheat gluten with i.a. soy grits and wheat flour, mixing the blend with water to obtain a dough, which is then extruded under heating.
This mixture enables a high percentage of protein to be used, which is concentrated in the gluten, minerals (especially iron), vitamins and the food fibres of cereals and legumes. Its structure enables it to be used as food to be consumed cold to the flavour of mortadella, ham, bresaola, guanciale etc..., or hot as steak, stew, mince, hamburger, sausage, pizzaiola, etc...

How vegetable meat is made:
A percentage of gluten from 45% to 99.9% is mixed, with a percentage of one or more cereal flours from 0.1% to 55%, or with a percentage of one or more legume flours from 0.1% to 55%, or with a percentage of one or more cereal and legume flours together from 0.1% to 55%.
This mixture is seasoned with various spices and after being kneaded and worked with water or vegetable broth, afterwards the spices of the required size are prepared and boiled for about two hours.
The list of cereals used for cereal flours is: hard grain, soft grain, buckwheat, kamut grain, oats, barley, pearl barley, maize, rye, spelt, rice.
The list of legumes used for legume flours is: chickpea, pea, broad bean, lentil, bean, soya bean, chickling.
The kind of cereal or legume flours, which is used, can be wholemeal, fine, extra fine, bran.
The quality of gluten, cereal and legume flours used can be biological or non-biological.
Vegetable meat comes in the form of a piece of meat such as a cylindrical shaped filet with rounded ends.
Its weight may be 0.5 kg.; 1kg.; 2kg.; 3kg.; etc..., in order to obtain this cylindrical shape, synthetic casings for salami or other forcemeat products may be used.
The list of seasonings used is: garlic, fennel seeds, rosemary, pistachio, paprika, black pepper, chili, salt, basil, parsley, extra pure olive oil, yeast extract etc...
The amount of water or vegetable broth for the flour dough is between 0.8 litres to 1 litre for every kilogramme of flour mixture.
The various kinds of vegetable meat named above (steak, stew, hamburger, mortadella, ham, etc...) are obtained by playing around with the percentages of the amounts of gluten and of cereal and legume flours which have been used, also with the different types of cereal and legume flours (wholemeal, fine, extra fine, bran) and as well as with the different types of spices used.

The advantages of vegetable meat are the following:
1) It gives anyone not eating meat (vegetarians), anyone who cannot eat it because of cholesterol, uric acids, or digestive problems, the chance to have complete alternative to animal meat (due to its nutritional value as well as to the wide range of different kinds of vegetable meat)
2) It is extremely suitable for being produced with a modern industrial system, in fact by using the latest flour mixers and modern boilers for cooking and with an automatic system for vacuum-sealed packing, the product can be made in extremely large quantities.
3) It can be kept in a fridge in a vacuum-sealed package for 30 days and frozen for 12 months.

-- Let us give an example of how to come up with one kind of vegetable meat: Steak.
The following flours are mixed: gluten 700 grammes, wholemeal chickpea 200 grammes, wholemeal oats 70 grammes, wholemeal spelt 30 grammes, with 1 litre of vegetable broth and seasoned with salt, pepper, rosemary, extra pure olive oil.
The mixture is kneaded until everything is blended and is left to stand for twenty minutes, then the cylindrical shaped pieces of meat are prepared using synthetic casings for salami and it is boiled for one hour and forty five minutes.

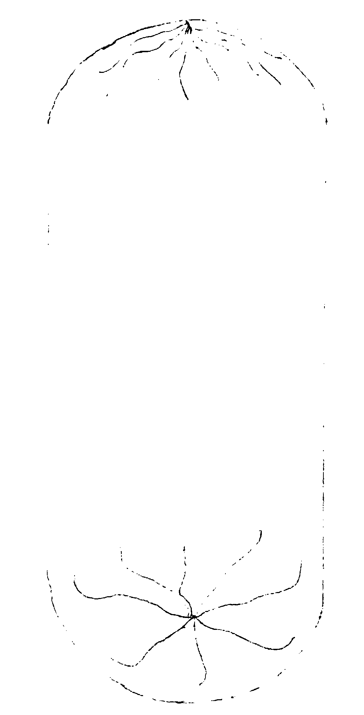

## Claims

1. A process for producing "vegetable meat", i.e. a vegetable food which is alternative to meat, which process comprises the steps of:
a) providing a mixture of 45 to 99.9% by weight of gluten and 0.1 to 55% by weight of a flour selected from the group consisting of cereal flours, legume flours and mixtures thereof,
b) admixing said mixture of gluten and flour with water or vegetable broth, in a ratio of 1 kg of said mixture per 0.8 to 1.0 1 of water or vegetable broth,
c) kneading the mixture from step b),
d) shaping it into cylindrical pieces by means of synthetic casings for salami or similar forcemeat,
e) boiling the thus obtained shaped pieces for 105 to 120 minutes.

2. A process according to claim 1, wherein the flour is a cereal flour

3. A process according to claim any one of claims 1 and 2, wherein the cereal flour is selected from the group comprising hard wheat flour, soft wheat flour, buckwheat flour, kamut grain flour, oat flour, barley flour, pearl barley flour, maize flour, rye flour, spelt flour, rice flour.

4. A process according to claim 1, wherein the flour is legume flour.

5. A process according to any one of claims 1 and 4, wherein the legume flour is selected from the group comprising chickpea flour, pea flour, broad bean flour, lentil flour, bean flour, soy bean flour, chickling flour.

6. A process according to claim 1, wherein the flour is a mixture of one cereal flour and one legume flour.

7. A process according to claim 1, wherein the flour is a mixture one legume flour and at least two cereal flours.

8. A process according to claim 1, wherein the flour is a mixture of one cereal flour and at least two legume flours.

9. A process according to claim 1, wherein the flour is a mixture of at least two cereal flours and at least two legume flours.

10. A process according to any one of claims 1 to 9, wherein the cereal and/or legume flour is wholemeal flour, fine flour, extra fine flour or bran.

11. A process according to any one of the preceding claims, wherein the gluten and/or the cereal flour and/or the legume flour is biological.

12. A process according to any one of the preceding claims, further comprising the step of seasoning the mixture of gluten and flour.

13. A process according to claim 12, wherein said seasoning step is carried out by adding at least one ingredient selected from the group comprising garlic, fennel seed, rosemary, pistachio, paprika, black pepper, chilli, salt, basil, parsley, extra pure olive oil, yeast extract.

14. A process according to any one of the preceding claims, wherein said mixture of gluten and flour is admixed with water.

15. A process according to any one of claims 1 to 13, wherein said mixture of gluten and flour is admixed with vegetable broth.

16. A food product obtainable by the process of claims 1 to 15.

17. A food product according to claim 16, which is in the form of steak, stew, sausage, mince, hamburger, ham, "bresaola", "mortadella", "pizzaiola", "guanciale".

## Patentansprüche

1. Verfahren zur Herstellung von "pflanzlichem Fleisch", d.h. einem pflanzlichem Nahrungsmittel, das eine Alternative zu Fleisch ist, wobei das Verfahren folgende Schritte umfaßt:
a) Bereitstellung einer Mischung aus 45 bis 99,9 Gew.-% Gluten und 0,1 bis 55 Gew.-% eines Mehls, das ausgewählt wird aus der aus Pflanzenmehlen, Hülsenfruchtmehlen und deren Mischungen bestehenden Gruppe,
b) Mischen dieser Mischung aus Gluten und Mehl mit Wasser oder Gemüsebrühe in einem Verhältnis von 1 kg dieser Mischung pro 0,8 bis 1,01 Wasser oder Gemüsebrühe,
c) Kneten der Mischung aus Schritt b),
d) Formen zu zylindrischen Stücken mit Hilfe von synthetischen Hüllen für Salami oder ähnliche Füllungen,
e) Kochen der so erhaltenen geformten Stücke während 105 bis 120 Minuten.

2. Verfahren nach Anspruch 1, wobei das Mehl ein Getreidemehl ist.

3. Verfahren nach einem der Ansprüche 1 bis 2, wobei das Getreidemehl ausgewählt wird aus der Gruppe, die Hartweizenmehl, Weichweizenmehl, Buchweizenmehl, Kamutkornmehl, Hafermehl, Gerstenmehl, Perlgraupenmehl, Maismehl, Roggenmehl, Dinkelmehl, Reismehl umfaßt.

4. Verfahren nach Anspruch 1, wobei das Mehl Hülsenfruchtmehl ist.

5. Verfahren nach einem der Ansprüche 1 und 4, wobei das Hülsenfruchtmehl ausgewählt wird aus der Gruppe, die Kichererbsenmehl, Erbsenmehl, Pferdebohnenmehl, Linsenmehl, Bohnenmehl, Sojabohnenmehl, Saatplatterbsenmehl umfaßt.

6. Verfahren nach Anspruch 1, wobei das Mehl eine Mischung aus einem Getreidemehl und einem Hülsenfruchtmehl ist.

7. Verfahren nach Anspruch 1, wobei das Mehl eine Mischung aus einem Hülsenfruchtmehl und mindestens zwei Getreidemehlen ist.

8. Verfahren nach Anspruch 1, wobei das Mehl eine Mischung aus einem Getreidemehl und mindestens zwei Hülsenfruchtmehlen ist.

9. Verfahren nach Anspruch 1, wobei das Mehl eine Mischung aus mindestens zwei Getreidemehlen und mindestens zwei Hülsenfruchtmehlen ist.

10. Verfahren nach einem der Ansprüche 1 bis 9, wobei das Getreide- und/oder Hülsenfruchtmehl Vollkornmehl, Feinmehl, extra feines Mehl oder Kleie ist.

11. Verfahren nach einem der vorstehenden Ansprüche, wobei das Gluten und/oder das Getreidemehl und/oder das Hülsenfruchtmehl biologisch ist.

12. Verfahren nach einem der vorstehenden Ansprüche, darüber hinaus umfassend den Schritt des Würzens der Mischung aus Gluten und Mehl.

13. Verfahren nach Anspruch 12, wobei der Würzschritt durchgeführt wird durch Zugabe von mindestens einem Bestandteil, der ausgewählt wird aus der aus Knoblauch, Fenchelsamen, Rosmarin, Pistazie, Paprika, schwarzem Pfeffer, Chili, Salz, Basilikum, Petersilie, extra reinem Olivenöl, Hefeextrakt bestehenden Gruppe.

14. Verfahren nach einem der vorstehenden Ansprüche, wobei die Mischung aus Gluten und Mehl mit Wasser gemischt wird.

15. Verfahren nach einem der Ansprüche 1 bis 13, wobei die Mischung aus Gluten und Mehl mit Gemüsebrühe gemischt wird.

16. Lebensmittelprodukt, erhältlich durch das Verfahren der Ansprüche 1 bis 15.

17. Lebensmittelprodukt nach Anspruch 16, das in Form von Steak, Stew, Wurst, Gehacktem, Hamburger, Schinken, "Bresaola", "Mortadella", "Pizzaiola", "Guanciale" vorliegt.

## Revendications

1. Un procédé de production de "viande végétale", c'est-à-dire d'un aliment végétal qui est un substitut de viande, lequel procédé comprend les étapes suivantes :
a) fournir un mélange de 45 à 99,9 % en poids de gluten et 0,1 à 55 % en poids d'une farine choisie dans le groupe formé par les farines de céréales, les farines de légumineuses et leurs mélanges,
b) ajouter et mélanger ledit mélange de gluten et de farine à de l'eau ou un bouillon végétal, en un rapport de 1 kg dudit mélange pour 0,8 à 1,0 litre d'eau ou de bouillon végétal,
c) malaxer le mélange obtenu à l'étape b),
d) le façonner en éléments cylindriques au moyen d'enveloppes synthétiques pour salami ou produits à base de farce similaires,
e) faire bouillir les éléments ainsi façonnés pendant 105 à 120 minutes.

2. Un procédé selon la revendication 1, dans lequel la farine est une farine de céréale.

3. Un procédé selon l'une quelconque des revendications 1 et 2, dans lequel la farine de céréale est choisie dans le groupe formé par la farine de blé dur, la farine de blé tendre, la farine de sarrasin, la farine de kamut, la farine d'avoine, la farine d'orge, la farine d'orge perlé, la farine de maïs, la farine de seigle, la farine d'épeautre, la farine de riz.

4. Un procédé selon la revendication 1, dans lequel la farine est une farine de légumineuse.

5. Un procédé selon l'une quelconque des revendications 1 à 4, dans lequel la farine de légumineuse est choisie dans le groupe formé par la farine de pois chiche, la farine de pois, la farine de fève, la farine de lentille, la farine de haricot, la farine de soja, la farine de gesse.

6. Un procédé selon la revendication 1, dans lequel la farine est un mélange d'une farine de céréale et d'une farine de légumineuse.

7. Un procédé selon la revendication 1, dans lequel la farine est un mélange d'une farine de légumineuse et d'au moins deux farines de céréales.

8. Un procédé selon la revendication 1, dans lequel la farine est un mélange d'une farine de céréale et d'au moins deux farines de légumineuses.

9. Un procédé selon la revendication 1, dans lequel la farine est un mélange d'au moins deux farines de céréales et d'au moins deux farines de légumineuses.

10. Un procédé selon l'une quelconque des revendications 1 à 9, dans lequel la farine de céréale et/ou de légumineuse est une farine complète, une farine fine, une farine extra-fine ou du son.

11. Un procédé selon l'une quelconque des revendications précédentes, dans lequel le gluten et/ou la farine de céréales et/ou la farine de légumineuses sont biologiques.

12. Un procédé selon l'une quelconque des revendications précédentes, comprenant de plus l'étape consistant à assaisonner le mélange de gluten et de farine.

13. Un procédé selon la revendication 12, dans lequel ladite étape d'assaisonnement est exécutée en ajoutant au moins un ingrédient choisi dans le groupe formé par l'ail, les graines de fenouil, le romarin, la pistache, le paprika, le poivre noir, le piment, le sel, le basilic, le persil, l'huile d'olive extra-pure, l'extrait de levure.

14. Un procédé selon l'une quelconque des revendications précédentes, dans lequel ledit mélange de gluten et de farine est mélangé à de l'eau.

15. Un procédé selon l'une quelconque des revendications 1 à 13, dans lequel ledit mélange de gluten et de farine est mélangé à du bouillon végétal.

16. Un produit alimentaire pouvant être obtenu par le procédé des revendications 1 à 15.

17. Un produit alimentaire selon la revendication 16, qui est sous la forme de bifteck, ragoût, saucisse, hachis, hamburger, jambon, "bresaola", mortadelle, "pizzaiola", "guanciale".
